# EUROPÄISCHE PATENTSCHRIFT

(11) **EP 0 805 847 B1**
(45) Veröffentlichungstag und Bekanntmachung des Hinweises auf die Patenterteilung: **05.07.2000**
(21) Anmeldenummer: 96900508.1
(22) Anmeldetag: 12.01.1996
(51) Int. Cl.: C12G 3/00, C12G 3/06

(54) **ALKOHOLHALTIGE INSTANT-GETRÄNKEMISCHUNG, IHRE HERSTELLUNG UND VERWENDUNG**
ALCOHOLIC INSTANT BEVERAGE MIXTURE, ITS PRODUCTION AND USE
MELANGE DE BOISSONS INSTANTANE CONTENANT DE L'ALCOOL, SA PRODUCTION ET SON UTILISATION

(30) Priorität: 13.01.1995 DE 19500919
(43) Veröffentlichungstag der Anmeldung: 12.11.1997
(73) Patentinhaber: KRÜGER GmbH & CO. KG, D-51469 Bergisch-Gladbach (DE)
(72) Erfinder: SCHWEREN, Rolf, D-50171 Kerpen (DE); LORENZ, Stephanie, D-53123 Bonn (DE)
(74) Vertreter: Eggert, Hans-Gunther, Dr.
(86) Internationale Anmeldenummer: DE9600037
(87) Internationale Veröffentlichungsnummer: WO9621722

(56) Entgegenhaltungen:
- WO-A-89/03642
- DE-A- 1 907 480
- FR-A- 2 665 613
- GB-A- 2 110 235
- US-A- 3 956 508
- DATABASE WPI Section Ch, Week 8228 Derwent Publications Ltd., London, GB; Class D16, AN 82-58312e XP002001591 & JP,A,57 091 187 (SATO SHOKUHIN KOGYO) , 7.Juni 1982
- DATABASE WPI Section Ch, Week 8238 Derwent Publications Ltd., London, GB; Class A97, AN 82-80451e XP002001592 & JP,A,57 132 876 (SATO SHOKUHIN KOGYO) , 17.August 1982

## Beschreibung

Die Erfindung bezieht sich auf eine alkoholhaltige Instant-Getränkemischung, ein Verfahren zur Herstellung derselben und auf ihre Verwendung.

In der WO 89/03642 wird ein Verfahren beschrieben, bei alkoholischen Getränken, insbesondere Bier, durch Destillation eine Trennung vorzunehmen, die einerseits zu einer nichtflüchtigen Fraktion mit den wasserlöslichen Bestandteilen und andererseits zu einer Fraktion mit Alkohol und weiteren flüchtigen Komponenten führt. Die Fraktionen werden einer Bearbeitung unterworfen, um eine Aufbewahrung und spätere Verwendung zu ermöglichen.
Dazu wird der wäßrigen Fraktion das Wasser entzogen und die alkoholhaltige flüchtige Fraktion wird mit einem hydrolysierten Polysaccharid versetzt, das in Alkohol unlöslich ist, aber sich in wäßrigen Lösungen auflöst. Die Wiederherstellung des ursprünglichen Getränkes wird durch Kombination der beiden Trockenfraktionen und Zusatz von Wasser mit anschließender Carbonisierung durchgeführt. Somit stellt dieser Stand der Technik im wesentlichen ein Verfahren dar, für alkoholische Getränke eine wirtschaftlich günstige Aufbewahrungsform bereitzustellen.

Zur Herstellung eines alkoholhaltigen Pulvers beschreibt die US-A-3,956,508, daß eine ethanolische Lösung, die bis zu 10 % Wasser aufweist, mit einem expandierten Dextrin aufgearbeitet wird. Hierbei entsteht ein trockenes, fließfähiges Pulver. Solche Pulver können mit aromawirksamen Substanzen vermischt und in gasdichte Beutel verpackt werden. Dem alkoholhaltigen Pulver kann ein bestimmter Anteil an gefriergetrocknetem Kaffee zugesetzt werden.

Die GB-A-2 110 235 beschreibt ebenfalls die Herstellung eines alkoholhaltigen Pulvers auf der Grundlage von Polysacchariden. Dazu werden bestimmte Polysaccharide mit Wasser-Alkohol-Mischungen verrührt. Aus diesen flüssigen Mischungen werden die alkoholhaltigen Pulver durch Sprühtrocknung hergestellt. Die verwendeten hydrolysierten Polysaccharide weisen mindestens 50 % Polysaccharide mit einem Glucosepolymerisationsgrad von bis zu 8 und bis zu 10 % Saccharide mit einem Glucosepolymerisationsgrad von bis zu 2 auf.

Bei der Sprühtrocknung treten aber unvermeidlich Verluste der flüchtigen Bestandteile auf, wobei insbesondere auch Alkohol verlorengeht. Das Verfahren erfordert einen erheblichen Aufwand, um die Gefahr von Explosionen bei der Sprühtrocknung zu vermeiden.

In der JP-A-57 091 187 wird ein Trockenpulver durch Sprühtrocknung einer Lösung hergestellt, die ein alkoholisches Getränk, eine organische Säure und Dextrin enthält. Das getrocknete Pulver wird mit Zucker und weiteren Bestandteilen vermischt und luftdicht verpackt.

Auch dieses Verfahren hat den Nachteil der Sprühtrocknung der alkoholischen Lösung. Das Endprodukt hat einen Gehalt an organischen Säuren, insbesondere Zitronensäure, Maleinsäure, Fumarsäure.

Auch bei dem Verfahren der JP-A-57 132 876 wird aus einem alkoholischen Getränk wie Whisky, Brandy oder Gin, und Dextrin ein Pulver durch Sprühtrocknung hergestellt. Das nach der Sprühtrocknung erhaltene Pulver wird mit reinem Alkohol versetzt.

Der vorliegenden Erfindung liegt die Aufgabe zugrunde, auf einfache Weise eine abgepackte alkoholhaltige Instant-Getränkemischung bereitzustellen, die durch Auflösen in einer Flüssigkeit ein alkoholhaltiges Getränk ergibt.

Die Aufgabe wird erfindungsgemäß durch eine alkoholhaltige in einem Portionsbeutel abgepackte Instant-Getränkemischung gelöst, die Maltodextrin und/oder Milchpulver, und weitere nichtflüchtige Komponenten aus der Gruppe von Ballaststoffen, Süßstoffen, Säuerungsmitteln, Säureregulatoren und Farbstoffen in Form eines Pulvers oder Granulats und 5 bis 50 Gewichtsprozent einer alkoholischen Komponente enthält, die von den nicht flüchtigen Komponenten adsorbiert ist.

Die alkoholische Komponente ist in einer bevorzugten Ausführungsform der Erfindung Ethanol oder eine aromatisierte Ethanolmischung.
Der Anteil der alkoholischen Komponente kann zwischen 5 und 50 Gew.-%, vorzugsweise zwischen 10 und 30 Gew.-%, liegen.
Gemäß der Erfindung kann die alkoholhaltige Instant-Getränkemischung eine aromawirksame Substanz und Zucker enthalten.

Diese aromawirksame Substanz kann ein Gewürz, ein Pflanzenextrakt, ein Fruchtpulver, ein Kaffee-Extrakt, ein Tee-Extrakt, ein Kakaopulver oder ein natürlicher, naturidentischer oder synthetischer Aromastoff sein. Sie kann aber genausogut ein etherisches Öl oder eine Riechstoffverbindung sein.
Wenn die aromawirksame Substanz ein Gewürz ist, wird es in einer weiteren Ausführungsform der Erfindung aus der Gruppe von Salz, Zimt, Curry, Basilikum, Vanille, Nelke, Muskat, Kardamon gewählt.
Der Anteil der aromawirksamen Substanz kann zwischen 0,05 und 5 Gew.-%, vorzugsweise zwischen 0,5 und 2 Gew.-%, liegen.

Eine wesentliche Eigenschaft besteht darin, daß die alkoholhaltige Instant-Getränkemischung in einer für die Getränkeherstellung geeigneten Flüssigkeit leicht löslich ist. Diese Flüssigkeit kann beispielsweise Wasser sein.

Die alkoholhaltige Instant-Getränkemischung kann in Pulverform oder auch in Form eines Granulats vorliegen. Wenn sie in Form eines Granulats vorliegt, kann dieses eine Vielzahl von Kapillaren aufweisen.
Besonders geeignet als nichtflüchtige Komponenten sind Granulate, die ein Speicherungsvermögen für Flüssigkeiten aufweisen. Dieses Speicherungsvermögen kann beispielsweise auf die Vielzahl der Kapillaren innerhalb der Granulate zurückzuführen sein.
Ebenso können die nichtflüchtigen Komponenten in Form vernetzter, amorpher Teilchen vorliegen, wie sie beispielsweise bei der Sprühtrockung von Flüssigkeiten entstehen.

Die alkoholhaltige, in einem Portionsbeutel abgepackte Instant-Getränkemischung wird mittels eines Verfahrens hergestellt, bei dem die Maltodextrin und/oder Milchpulver, Zucker und aromawirksame Substanzen enthaltenden, nicht flüchtigen Komponenten vermischt, die Pulvermischung beim Abfüllen von Portionseinheiten in den Portionsbeutel vorgelegt, die entsprechende Menge der alkoholischen Komponente auf die Mischung gesprüht und der Beutel anschließend sofort verschlossen wird.

Wenn man als nicht flüchtige Komponenten deren Granulate zur Adsorption der alkoholischen Komponente einsetzen will, so geschieht das durch Vermischen der nicht flüchtigen Komponenten und Granulieren dieser Mischung vor den weiteren Verfahrensschritten.

Die stark vernetzte Struktur des Maltodextrins erlaubt es, größere Mengen Alkohol leicht aufzunehmen. Diese Eigenschaft des Maltodextrins kann man sich zu Nutzen machen, indem die nichtflüchtigen Komponenten zunächst vermischt werden und die Pulvermischung auf der Abfüllanlage in den Portionsbeutel vorgelegt wird. Die entsprechende Menge Alkohol wird anschließend auf die Mischung gesprüht und der Beutel sofort verschlossen.

Die erfindungsgemäßen alkoholischen Instant-Getränkemischungen finden beispielsweise Verwendung für ein Erfrischungsgetränk, einen Longdrink oder einen Cocktail.

Der besondere Vorteil der erfindungsgemäßen alkoholischen Instant-Getränkemischungen liegt in den bekannten Vorzügen von Instant-Getränken allgemein: So haben diese ein geringes Gewicht im Vergleich zum fertigen, zubereiteten Getränk (leichter Transport), sie sind leicht zuzubereiten, tragen zur Platzersparnis bei und sind überall schnell verfügbar.

Die folgenden Beispiele dienen der Erläuterung der Erfindung, ohne diese selbst zu begrenzen.

| **Beispiel 1:** | |
|---|---|
| Maltodextrin | 38,00 Gew.-% |
| Ethanolmischung | 30,00 Gew.-% |
| Zucker | 20,00 Gew.-% |
| Milchpulverzubereitung | 10,00 Gew.-% |
| Fruchtpulver | 1,40 Gew.-% |
| Ballaststoffe | 0,10 Gew.-% |
| Aromawirks. Substanz | 0,50 Gew.-% |

Die Mischung wurde hergestellt, indem die nichtflüchtigen Komponenten der Instant-Getränkemischung - Maltodextrin, Zucker, Milchpulverzubereitung, Fruchtpulver und Ballaststoffe - in einer Mischvorrichtung gemischt werden. Zu dieser Mischung wird dann die aromawirksame Substanz gegeben. Anschließend werden 30 Gew.-Teile der Ethanolmischung unter Rühren hinzugegeben und das ganze durch Mischen homogenisiert. Zuletzt wird die restliche Menge (30 Gew.-Teile der Ethanolmischung) der alkoholischen Komponente zu der homogenisierten Mischung unter Rühren hinzugegeben.
Die fertige Mischung eignet sich beispielsweise zur Herstellung eines alkoholischen Milchgetränks, wobei 40,0 g dieser erfindungsgemäßen Instant-Getränkemischung in 200 ml kalter Milch gelöst werden.

| **Beispiel 2:** | |
|---|---|
| Zucker | 33,40 Gew.-% |
| Milchpulver | 25,30 Gew.-% |
| Kakaopulver | 21,00 Gew.-% |
| Ethanolmischung | 20,00 Gew.-% |
| Salz | 0,20 Gew.-% |
| Aromawirks. Substanz | 0,10 Gew.-% |

Die angegebene Mischung wird wie in Beispiel 1 hergestellt und eignet sich beispielsweise zur Herstellung eines heißen alkoholischen, kakaohaltigen Milchgetränks, wobei 30,0 g dieser erfindungsgemäßen Instant-Getränkemischung in 120 ml heißem Wasser gelöst werden.

| **Beispiel 3:** | |
|---|---|
| Zucker | 36,70 Gew.-% |
| Maltodextrin | 30,00 Gew.-% |
| Ethanolmischung | 25,00 Gew.-% |
| Säuerungsmittel | 4,00 Gew.-% |
| Fruchtpulver | 1,80 Gew.-% |
| Aromawirks. Substanz | 1,00 Gew.-% |
| Säureregulator | 1,00 Gew.-% |
| Farbstoff | 0,50 Gew.-% |

Die angegebene Mischung wird wie in Beispiel 1 hergestellt und eignet sich beispielsweise zur Herstellung eines kalten alkoholischen Erfrischungsgetränks, wobei 40,0 g dieser erfindungsgemäßen Instant-Getränkemischung in 200 ml kaltem Wasser gelöst werden.

## Patentansprüche

1. Alkoholhaltige in einem Portionsbeutel abgepackte Instant-Getränkemischung, enthaltend Maltodextrin und/oder Milchpulver, und weitere nichtflüchtige Komponenten aus der Gruppe von Ballaststoffen, Süßstoffen, Säuerungsmitteln, Säureregulatoren und Farbstoffen in Form eines Pulvers oder Granulats und 5 bis 50 Gew.-% einer alkoholischen Komponente in Form von Ethanol oder einer aromatisierten Ethanolmischung, die von den nichtflüchtigen Komponenten adsorbiert ist.

2. Alkoholhaltige Instant-Getränkemischung nach Anspruch 1, dadurch gekennzeichnet, daß sie als nichtflüchtige Komponente auch Zucker enthält.

3. Alkoholhaltige Instant-Getränkemischung nach Anspruch 1 oder 2, dadurch gekennzeichnet, daß sie eine aromawirksame Substanz in einer Menge von 0,05 bis 5 Gew.-%, vorzugsweise 0,5 bis 2 Gewichtsprozent, enthält.

4. Alkoholhaltige Instant-Getränkemischung nach einem der Ansprüche 1 bis 3, dadurch gekennzeichnet, daß der Anteil der alkoholischen Komponente 10 bis 30 Gew.-% beträgt.

5. Alkoholhaltige Instant-Getränkemischung nach einem der Ansprüche 1 bis 4, dadurch gekennzeichnet, daß die aromawirksame Substanz ein Gewürz, ein Pflanzenextrakt, ein Fruchtpulver, ein Kaffee-Extrakt, ein Tee-Extrakt, ein Kakaopulver oder ein natürlicher, naturidentischer oder synthetischer Aromastoff ist.

6. Alkoholhaltige Instant-Getränkemischung nach Anspruch 5, dadurch gekennzeichnet, daß die aromawirksame Substanz ein etherisches Öl oder eine Riechstoffverbindung ist.

7. Alkoholhaltige Instant-Getränkemischung nach Anspruch 5, dadurch gekennzeichnet, daß das Gewürz aus der Gruppe von Salz, Zimt, Curry, Basilikum, Vanille, Nelke, Muskat, Kardamom ausgewählt ist.

8. Alkoholhaltige Instant-Getränkemischung nach einem der Ansprüche 1 bis 7, dadurch gekennzeichnet, daß die nichtflüchtigen Komponenten in Form vernetzter, amorpher Teilchen vorliegen.

9. Alkoholhaltige Instant-Getränkemischung nach einem der Ansprüche 1 bis 8, dadurch gekennzeichnet, daß sie in einer für die Getränkeherstellung geeigneten Flüssigkeit leicht löslich ist.

10. Verfahren zur Herstellung einer abgepackten, alkoholhaltigen Instant-Getränkemischung nach einem der Ansprüche 1 bis 9, dadurch gekennzeichnet, daß die nichtflüchtigen Komponenten vermischt werden, die Pulvermischung beim Abfüllen von Portionseinheiten in einen Portionsbeutel vorgelegt, die entsprechende Menge der alkoholischen Komponente auf die Mischung gesprüht und der Beutel anschließend sofort verschlossen wird.

11. Verfahren nach Anspruch 10, dadurch gekennzeichnet, daß die Pulvermischung vor dem Abfüllen granuliert wird.

12. Verwendung der alkoholhaltigen Instant-Getränkemischung nach einem der Ansprüche 1 bis 9 als Instant-Zubereitung für ein Erfrischungsgetränk.

## Claims

1. An alcohol-containing instant-drink mix packed in a sachet, containing maltodextrin and/or milk powder, and additional non-volatile constituents from the group consisting of bulking agents, sweeteners, acidifiers, acidity regulators and colourings in the form of a powder or granules and 5 to 50% by weight of an alcoholic constituent in the form of ethanol or an flavoured ethanol mixture, which is adsorbed by the non-volatile constituents.

2. An alcohol-containing instant-drink mix according to Claim 1, characterised in that it also contains sugar as non-volatile constituent.

3. An alcohol-containing instant-drink mix according to Claim 1 or 2, characterised in that it contains a flavouring substance in a quantity of 0.05 to 5% by weight, preferably 0.5 to 2% by weight.

4. An alcohol-containing instant-drink mix according to one of Claims 1 to 3, characterised in that the proportion of the alcoholic constituent is 10 to 30% by weight.

5. An alcohol-containing instant-drink mix according to one of Claims 1 to 4, characterised in that the flavouring substance is a spice, a plant extract, a fruit powder, a coffee extract, a tea extract, a cocoa powder or a natural, nature-identical or synthetic flavouring substance.

6. An alcohol-containing instant-drink mix according to Claim 5, characterised in that the flavouring substance is an ethereal oil or an odiferous substance compound.

7. An alcohol-containing instant-drink mix according to Claim 5, characterised in that the spice is selected from the group consisting of salt, cinnamon, curry, basil, vanilla, clove, nutmeg or cardamon.

8. An alcohol-containing instant-drink mix according to one of Claims 1 to 7, characterised in that the non-volatile constituents are present in the form of cross-linked, amorphous particles.

9. An alcohol-containing instant-drink mix according to one of Claims 1 to 8, characterised in that it is readily soluble in a liquid suitable for preparing drinks.

10. A process for preparing a packed, alcohol-containing instant-drink mix according to one of Claims 1 to 9, characterised in that the non-volatile constituents are mixed, the powder mixture is placed in a sachet when filling portion units, the corresponding quantity of the alcoholic constituent is sprayed on to the mixture and the sachet is then closed immediately.

11. A process according to Claim 10, characterised in that the powder mix is granulated before filling.

12. The use of the alcohol-containing instant-drink mix according to one of Claims 1 to 9 as an instant preparation for a refreshing drink.

## Revendications

1. Composition de boisson instantanée alcoolisée emballée dans un sachet de portion, contenant de la maltodextrine et/ou du lait en poudre et d'autres composants non volatils choisis dans l'ensemble constitué par des matières inertes, des édulcorants, des acidifiants, des régulateurs d'acidité et des colorants sous la forme d'une poudre ou de granules et de 5 à 50 % en poids d'un composant alcoolique sous la forme d'éthanol ou d'un mélange d'éthanol aromatisé qui est adsorbé par les composants non volatils.

2. Composition de boisson instantanée alcoolisée selon la revendication 1, caractérisée en ce qu'elle contient aussi du sucre en tant que composant non volatil.

3. Composition de boisson instantanée alcoolisée selon la revendication 1 ou 2, caractérisée en ce qu'elle contient une substance aromatisante en une quantité de 0,05 à 5 % en poids, de préférence de 0,5 à 2 % en poids.

4. Composition de boisson instantanée alcoolisée selon l'une des revendications 1 à 3, caractérisée en ce que la proportion du composant alcoolique est de 10 à 30 % en poids.

5. Composition de boisson instantanée alcoolisée selon l'une des revendications 1 à 4, caractérisée en ce que la substance aromatisante est une épice, un extrait de plantes, une poudre de fruit, un extrait de café, un extrait de thé, de la poudre de cacao ou un arôme naturel, un arôme identique au naturel ou synthétique.

6. Composition de boisson instantanée alcoolisée selon la revendication 5, caractérisée en ce que la substance aromatisante est une huile éthérée ou un composé odorant.

7. Composition de boisson instantanée alcoolisée selon la revendication 5, caractérisée en ce qu'on choisit l'épice dans l'ensemble constitué par un sel, la cannelle, le curry, le basilique, la vanille, le clou de girofle, la muscade et la cardamome.

8. Composition de boisson instantanée alcoolisée selon l'une des revendications 1 à 7, caractérisée en ce que les composants non volatils sont présents sous la forme de particules amorphes réticulées.

9. Composition de boisson instantanée alcoolisée selon l'une des revendications 1 à 8, caractérisée en ce qu'elle est aisément soluble dans un liquide approprié à la préparation d'une boisson.

10. Procédé de préparation d'une composition de boisson instantanée alcoolisée emballée selon l'une des revendications 1 à 9, caractérisé en ce qu'on mélange les composants non volatils, on introduit le mélange en poudre, au moment du conditionnement de portions unitaires, dans un sachet de portion, on pulvérise la quantité correspondante du composant alcoolique sur le mélange et immédiatement après cela, on ferme le sachet.

11. Procédé selon la revendication 10, caractérisé en ce que le mélange en poudre est transformé en granules avant le conditionnement.

12. Utilisation de la composition de boisson instantanée alcoolisée selon l'une des revendications 1 à 9 en tant que préparation instantanée pour une boisson rafraîchissante.
